(19) Europäisches Patentamt
European Patent Office
Office européen des brevets

(11) EP 2 505 062 A1

(12) EUROPEAN PATENT APPLICATION

(43) Date of publication:
03.10.2012 Bulletin 2012/40

(21) Application number: 12174087.2

(22) Date of filing: 26.06.2008

(51) Int Cl.:
*A01N 57/20* (2006.01) *A01N 39/02* (2006.01)
*A01N 39/04* (2006.01)

(84) Designated Contracting States:
AT BE BG CH CY CZ DE DK EE ES FI FR GB GR HR HU IE IS IT LI LT LU LV MC MT NL NO PL PT RO SE SI SK TR

(30) Priority: 29.06.2007 US 937788 P

(62) Document number(s) of the earlier application(s) in accordance with Art. 76 EPC:
08771973.8 / 2 170 079

(71) Applicant: **Dow AgroSciences, LLC**
**Indianapolis,**
**Indiana 46268-1054 (US)**

(72) Inventors:
- **Haack, Alan**
  **Roseville, CA California 95661 (US)**
- **Olson, Brian**
  **Geneva, NY New York 14456 (US)**
- **Schmitzer, Paul**
  **Indianapolis, IN Indiana 46250 (US)**

(74) Representative: **Dey, Michael**
**Weickmann & Weickmann**
**Patentanwälte**
**Postfach 860820**
**81635 München (DE)**

Remarks:
This application was filed on 28-06-2012 as a divisional application to the application mentioned under INID code 62.

# (54) Synergistic herbicidal composition containing a substituted phenoxy alkanoic acid derivative and a glyphosate derivative

(57) An herbicidal composition containing (a) an herbicidal substituted phenoxy alkanoic acid derivative component and (b) an herbicidal glyphosate component provides synergistic control of selected weeds.

EP 2 505 062 A1

## Description

This application claims the benefit of United States Provisional Application Serial Number 60/937,788 filed on June 29, 2007. This invention concerns a synergistic herbicidal composition containing (a) a substituted phenoxy alkanoic acid derivative and (b) a glyphosate derivative. More particularly, the invention concerns a synergistic herbicidal composition containing (a) a 2,4-dichlorophenoxy acetic acid (2,4-D) or 2,4-dichlorophenoxy propionic acid (dichlorprop) derivative and (b) a glyphosate salt.

The protection of crops from weeds and other vegetation which inhibit crop growth is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use.

In some cases, herbicidal active ingredients have been shown to be more effective in combination than when applied individually and this is referred to as "synergism." As described in the Herbicide Handbook of the Weed Science Society of America, Seventh Edition, 1994, p. 318, "'synergism' [is] an interaction of two or more factors such that the effect when combined is greater than the predicted effect based on the response of each factor applied separately." The present invention is based on the discovery that substituted phenoxy alkanoic acid derivatives and glyphosate derivatives, already known individually for their herbicidal efficacy, display a synergistic effect when applied in combination.

The herbicidal compounds forming the synergistic composition of this invention are independently known in the art for their effects on plant growth.

For example, 2,4-D, 2,4-dichlorophenoxy acetic acid, is a selective systemic herbicide used to control annual and perennial broad-leaved weeds in various crops as well as in non-crop land, including areas adjacent to water. It is commercially available, for example, as an ester such as Esteron™ herbicide from Dow AgroSciences and as a salt such as DMA-4™ herbicide from Dow AgroSciences. Dichlorprop, 2,4-dichlorophenoxy propionic acid, is a selective systemic herbicide used to control annual and perennial broad-leaved weeds in various crops as well as in non-crop land. It is commercially available, for example, as a salt such as Dicopur™ DP herbicide or Duplosan ™ DP herbicide from Nufarm.

Glyphosate, *N*-(phophonomethyl)glycine, is a non-selective systemic herbicide used to control annual and perennial grasses and broad-leaved weeds, particularly in crops that have been genetically modified to be tolerant of glyphosate. It is commercially available, for example, as Roundup™ herbicide from Monsanto or Glyphomax Plus™ herbicide from Dow AgroSciences.

The present invention concerns a synergistic herbicidal mixture comprising an herbicidally effective amount of (a) a substituted phenoxy alkanoic acid derivative of the formula

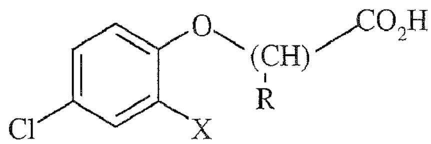

wherein

X represents Cl or $CH_3$;

R independently represents H or $CH_3$; and

n is an integer from 1-3;

and (b) a glyphosate derivative. Preferred substituted phenoxy alkanoic acids are 2,4-D and dichlorprop. The compositions may also contain an agriculturally acceptable adjuvant or carrier.

The present invention also concerns a method of controlling the growth of undesirable vegetation, particularly in crops that are tolerant, either naturally or through genetic modification, to the active herbicides of the synergistic mixture, and the use of this synergistic composition.

The species spectrums of the compounds of the synergistic mixture, i.e., the weed species which the respective compounds control, are broad and highly complimentary. While glyphosate is a non-selective herbicide, resistance to glyphosate by several weed species, for example, horseweed (*Conyza canadensis,* ERICA), has been well documented. The synergistic mixture of 2,4-D or dichlorprop and glyphosate is particularly effective at controlling these glyphosate resistant weeds. Other weeds which the mixture of 2,4-D or dichlorprop and glyphosate synergistically control include ivyleaf morningglory (*Ipomoea hederacea;* IPOHE), Canada thistle (*Cirsium arvense*; CIRAR), prickly sida (*Sida spinosa;*

SIDSP), velvetleaf (*Abutilon theophrasti;* ABUTH), common ragweed (*Ambrosia artemesifolia*; AMBEL), spiderwort (*Commelina benghalensis*; COMBE), hemp sesbania (*Sesbania exaltata;* SEBEX), field bindweed (*Polygonum convolvulus*; POLCO), and common waterhemp (*Amaranthus rudis*; AMATA).

The term herbicide is used herein to mean an active ingredient that kills, controls or otherwise adversely modifies the growth of plants. An herbicidally effective or vegetation controlling amount is an amount of active ingredient which causes an adversely modifying effect and includes deviations from natural development, killing, regulation, desiccation, retardation, and the like. The terms plants and vegetation include germinating seeds, emerging seedlings and established vegetation.

Herbicidal activity is exhibited by the compounds of the synergistic mixture when they are applied directly to the plant or to the locus of the plant at any stage of growth or before planting or emergence. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, and the like, as well as the amount of chemical applied. These and other factors can be adjusted as is known in the art to promote non-selective or selective herbicidal action. Generally, it is preferred to apply the composition of the present invention postemergence to relatively immature undesirable vegetation to achieve the maximum control of weeds.

The substituted phenoxy alkanoic acid derivatives in which R is $CH_3$ contain asymmetric carbon atoms and are capable of existing as a racemic mixture such as dichlorprop or as an individual enantiomer or an enriched enantiomeric mixture such as dichlorprop-P

By substituted phenoxy alkanoic acid derivatives and glyphosate derivatives is meant the acids themselves and their agriculturally acceptable esters and salts.

Suitable salts include those derived from alkali or alkaline earth metals and those derived from ammonia and amines. Preferred cations include sodium, potassium, magnesium, and aminium cations of the formula:

$$R_1R_2R_3NH^+$$

wherein $R_1$, $R_2$, and $R_3$ each, independently represents hydrogen or $C_1$-$C_{12}$ alkyl, $C_3$-$C_{12}$ alkenyl or $C_3$-$C_{12}$ alkynyl, each of which is optionally substituted by one or more hydroxy, $C_1$-$C_4$ alkoxy, $C_1$-$C_4$ alkylthio or phenyl groups, provided that $R_1$, $R_2$, and $R_3$ are sterically compatible. Preferred amine salts are those derived from ammonia, methylamine, dimethylamine, trimethylamine, isopropylamine, monoethanolamine, diethanolamine, triethanolamine, triisopropanolamine, 2-methylthiopropylamine, bisallylamine, 2-butoxyethylamine, morpholine, cyclo-dodecylamine, or benzylamine. Amine salts are often preferred because they are water-soluble and lend themselves to the preparation of desirable aqueous based herbicidal compositions.

Suitable esters include those derived from $C_1$-$C_{12}$ alkyl, $C_3$-$C_{12}$ alkenyl or $C_3$-$C_{12}$ alkynyl alcohols, such as methanol, *iso*-propanol, butanol, 2-ethylhexanol, butoxyethanol, methoxypropanol, allyl alcohol, propargyl alcohol or cyclohexanol.

In the composition of this invention, the weight ratio on an acid equivalent basis of the substituted phenoxy alkanoic acid component to glyphosate component at which the herbicidal effect is synergistic lies within the range of between 5:1 and 1:48. Preferably the weight ratio of the substituted phenoxy alkanoic acid component to the glyphosate component lies within the range of between 3:1 and 1:12 with a weight ratio of between 1:1 and 1:12 being especially preferred.

The rate at which the synergistic composition is applied will depend upon the particular type of weed to be controlled, the degree of control required, and the timing and method of application. In general, the composition of the invention can be applied at an application rate of between 100 grams of acid equivalents per hectare (g ae/ha) and 2000 g ae/ha based on the total amount of active ingredients in the composition. An application rate between 200 g ae/ha and 1000 g ae/ha is preferred. In an especially preferred embodiment of the invention, the 2,4-D component is applied at a rate between 35 g ae/ha and 560 g ae/ha, the dichlorprop component is applied at a rate between 35 g ae/ha and 280 g ae/ha and the glyphosate component is applied at a rate between 100 g ae/ha and 750 g ae/ha.

The components of the synergistic mixture of the present invention can be applied either separately or as part of a multipart herbicidal system.

The synergistic mixture of the present invention can be applied in conjunction with one or more other herbicides to control a wider variety of undesirable vegetation. When used in conjunction with other herbicides, the composition can be formulated with the other herbicide or herbicides, tank mixed with the other herbicide or herbicides or applied sequentially with the other herbicide or herbicides. Some of the herbicides that can be employed in conjunction with the synergistic composition of the present invention include: *amide herbicides* such as allidochlor, beflubutamid, benzadox, benzipram, bromobutide, cafenstrole, CDEA, chlorthiamid, cyprazole, dimethenamid, dimethenamid-P, diphenamid, epronaz, etnipromid, fentrazamide, flupoxam, fomesafen, halosafen, isocarbamid, isoxaben, napropamide, naptalam, pethoxamid, propyzamide, quinonamid and tebutam; *anilide herbicides* such as chloranocryl, cisanilide, clomeprop,

cypromid, diflufenican, etobenzanid, fenasulam, flufenacet, flufenican, mefenacet, mefluidide, metamifop, monalide, naproanilide, pentanochlor, picolinafen and propanil; *arylalanine herbicides* such as benzoylprop, flamprop and flamprop-M; *chloroacetanilide herbicides* such as acetochlor, alachlor, butachlor, butenachlor, delachlor, diethatyl, dimethachlor, metazachlor, metolachlor, S-metolachlor, pretilachlor, propachlor, propisochlor, prynachlor, terbuchlor, thenylchlor and xylachlor; *sulfonanilide herbicides* such as benzofluor, perfluidone, pyrimisulfan and profluazol; *sulfonamide herbicides* such as asulam, carbasulam, fenasulam and oryzalin; *antibiotic herbicides* such as bilanafos; *benzoic acid herbicides* such as chloramben, dicamba, 2,3,6-TBA and tricamba; *pyrimidinyloxybenzoic acid herbicides* such as bispyribac and pyriminobac; *pyrimidinylthiobenzoic acid herbicides* such as pyrithiobac; *phthalic acid herbicides* such as chlorthal; *picolinic acid herbicides* such as aminopyralid, clopyralid and picloram; *quinolinecarboxylic acid herbicides* such as quinclorac and quinmerac; *arsenical herbicides* such as cacodylic acid, CMA, DSMA, hexaflurate, MAA, MAMA, MSMA, potassium arsenite and sodium arsenite; *benzoylcyclohexanedione herbicides* such as mesotrione, sulcotrione, tefuryltrione and tembotrione; *benzofuranyl alkylsulfonate herbicides* such as benfuresate and ethofumesate; *carbamate herbicides* such as asulam, carboxazole chlorprocarb, dichlormate, fenasulam, karbutilate and terbucarb; *carbanilate herbicides* such as barban, BCPC, carbasulam, carbetamide, CEPC, chlorbufam, chlorpropham, CPPC, desmedipham, phenisopham, phenmedipham, phenmedipham-ethyl, propham and swep; *cyclohexene oxime herbicides* such as alloxydim, butroxydim, clethodim, cloproxydim, cycloxydim, profoxydim, sethoxydim, tepraloxydim and tralkoxydim; *cyclopropylisoxazole herbicides* such as isoxachlortole and isoxaflutole; *dicarboximide herbicides* such as benzfendizone, cinidon-ethyl, flumezin, flumiclorac, flumioxazin and flumipropyn; *dinitroaniline herbicides* such as benfluralin, butralin, dinitramine, ethalfluralin, fluchloralin, isopropalin, methalpropalin, nitralin, oryzalin, pendimethalin, prodiamine, profluralin and trifluralin; *dinitrophenol herbicides* such as dinofenate, dinoprop, dinosam, dinoseb, dinoterb, DNOC, etinofen and medinoterb; *diphenyl ether herbicides* such as ethoxyfen; *nitrophenyl ether herbicides* such as acifluorfen, aclonifen, bifenox, chlomethoxyfen, chlornitrofen, etnipromid, fluorodifen, fluoroglycofen, fluoronitrofen, fomesafen, furyloxyfen, halosafen, lactofen, nitrofen, nitrofluorfen and oxyfluorfen; *dithiocarbamate herbicides* such as dazomet and metam; *halogenated aliphatic herbicides* such as alorac, chloropon, dalapon, flupropanate, hexachloroacetone, iodomethane, methyl bromide, monochloroacetic acid, SMA and TCA; *imidazolinone herbicides* such as imazamethabenz, imazamox, imazapic, imazapyr, imazaquin and imazethapyr; *inorganic herbicides* such as ammonium sulfamate, borax, calcium chlorate, copper sulfate, ferrous sulfate, potassium azide, potassium cyanate, sodium azide, sodium chlorate and sulfuric acid; *nitrile herbicides* such as bromobonil, bromoxynil, chloroxynil, dichlobenil, iodobonil, ioxynil and pyraclonil; *organophosphorus herbicides* such as amiprofos-methyl, anilofos, bensulide, bilanafos, butamifos, 2,4-DEP, DMPA, EBEP, fosamine, glufosinate and piperophos; *phenoxy herbicides* such as bromofenoxim, clomeprop, 2,4-DEB, 2,4-DEP, difenopenten, disul, erbon, etnipromid, fenteracol and trifopsime; *phenoxyacetic herbicides* such as 4-CPA, 3,4-DA, MCPA-thioethyl and 2,4,5-T; *phenoxybutyric herbicides* such as 4-CPB, 3,4-DB, and 2,4,5-TB; *phenoxypropionic herbicides* such as cloprop, 4-CPP, 3,4-DP and fenoprop,; *aryloxyphenoxypropionic herbicides* such as chlorazifop, clodinafop, clofop, cyhalofop, diclofop, fenoxaprop, fenoxaprop-P, fenthiaprop, fluazifop, fluazifop-P, haloxyfop, haloxyfop-P, isoxapyrifop, metamifop, propaquizafop, quizalofop, quizalofop-P and trifop; *phenylenediamine herbicides* such as dinitramine and prodiamine; *pyrazolyl herbicides* such as benzofenap, pyrazolynate, pyrasulfotole, pyrazoxyfen, pyroxasulfone and topramezone; *pyrazolylphenyl herbicides* such as fluazolate and pyraflufen; *pyridazine herbicides* such as credazine, pyridafol and pyridate; *pyridazinone herbicides* such as brompyrazon, chloridazon, dimidazon, flufenpyr, metflurazon, norflurazon, oxapyrazon and pydanon; *pyridine herbicides* such as cliodinate, dithiopyr, fluroxypyr, haloxydine, picolinafen, pyriclor, thiazopyr and triclopyr; *pyrimidinediamine herbicides* such as iprymidam and tioclorim; *quaternary ammonium herbicides* such as cyperquat, diethamquat, difenzoquat, diquat, morfamquat and paraquat; *thiocarbamate herbicides* such as butylate, cycloate, di-allate, EPTC, esprocarb, ethiolate, isopolinate, methiobencarb, molinate, orbencarb, pebulate, prosulfocarb, pyributicarb, sulfallate, thiobencarb, tiocarbazil, tri-allate and vernolate; *thiocarbonate herbicides* such as dimexano, EXD and proxan; *thiourea herbicides* such as methiuron; *triazine herbicides* such as dipropetryn, triaziflam and trihydroxytriazine; *chlorotriazine herbicides* such as atrazine, chlorazine, cyanazine, cyprazine, eglinazine, ipazine, mesoprazine, procyazine, proglinazine, propazine, sebuthylazine, simazine, terbuthylazine and trietazine; *methoxytriazine herbicides* such as atraton, methometon, prometon, secbumeton, simeton and terbumeton; *methylthiotriazine herbicides* such as ametryn, aziprotryne, cyanatryn, desmetryn, dimethametryn, methoprotryne, prometryn, simetryn and terbutryn; *triazinone herbicides* such as ametridione, amibuzin, hexazinone, isomethiozin, metamitron and metribuzin; *triazole herbicides* such as amitrole, cafenstrole, epronaz and flupoxam; *triazolone herbicides* such as amicarbazone, bencarbazone, carfentrazone, flucarbazone, propoxycarbazone, sulfentrazone and thiencarbazone-methyl; *triazolopyrimidine herbicides* such as cloransulam, diclosulam, florasulam, flumetsulam, metosulam, penoxsulam and pyroxsulam; *uracil herbicides* such as butafenacil, bromacil, flupropacil, isocil, lenacil and terbacil; *3-phenyluracils*; *urea herbicides* such as benzthiazuron, cumyluron, cycluron, dichloralurea, diflufenzopyr, isonoruron, isouron, methabenzthiazuron, monisouron and noruron; *phenylurea herbicides* such as anisuron, buturon, chlorbromuron, chloreturon, chlorotoluron, chloroxuron, daimuron, difenoxuron, dimefuron, diuron, fenuron, fluometuron, fluothiuron, isoproturon, linuron, methiuron, methyldymron, metobenzuron, metobromuron, metoxuron, monolinuron, monuron, neburon, parafluron, phenobenzuron, siduron, tetrafluron and thidiazuron; *pyrimidinylsulfonylurea herbicides*

such as amidosulfuron, azimsulfuron, bensulfuron, chlorimuron, cyclosulfamuron, ethoxysulfuron, flazasulfuron, flucetosulfuron, flupyrsulfuron, foramsulfuron, halosulfuron, imazosulfuron, mesosulfuron, nicosulfuron, orthosulfamuron, oxasulfuron, primisulfuron, pyrazosulfuron, rimsulfuron, sulfometuron, sulfosulfuron and trifloxysulfuron; *triazinylsulfonylurea herbicides* such as chlorsulfuron, cinosulfuron, ethametsulfuron, iodosulfuron, metsulfuron, prosulfuron, thifensulfuron, triasulfuron, tribenuron, triflusulfuron and tritosulfuron; *thiadiazolylurea herbicides* such as buthiuron, ethidimuron, tebuthiuron, thiazafluron and thidiazuron; and *unclassified herbicides* such as acrolein, allyl alcohol, aminocyclopyrachlor, azafenidin, benazolin, bentazone, benzobicyclon, buthidazole, calcium cyanamide, cambendichlor, chlorfenac, chlorfenprop, chlorflurazole, chlorflurenol, cinmethylin, clomazone, CPMF, cresol, ortho-dichlorobenzene, dimepiperate, endothal, fluoromidine, fluridone, flurochloridone, flurtamone, fluthiacet, indanofan, methazole, methyl isothiocyanate, nipyraclofen, OCH, oxadiargyl, oxadiazon, oxaziclomefone, pentachlorophenol, pentoxazone, phenylmercury acetate, pinoxaden, prosulfalin, pyribenzoxim, pyriftalid, quinoclamine, rhodethanil, sulglycapin, thidiazimin, tridiphane, trimeturon, tripropindan and tritac.

The synergistic composition of the present invention is particularly useful when used on glyphosate-tolerant, glufosinate-tolerant, 2,4-D-tolerant, dicamba-tolerant or imiazolinone-tolerant crops. It is generally preferred to use the synergistic composition of the present invention in combination with herbicides that are selective for the crop being treated and which complement the spectrum of weeds controlled by these compounds at the application rate employed. It is further generally preferred to apply the synergistic composition of the present invention and other complementary herbicides at the same time, either as a combination formulation or as a tank mix.

The synergistic composition of the present invention can generally be employed in combination with known herbicide safeners, such as benoxacor, benthiocarb, brassinolide, cloquintocet (mexyl), cyometrinil, daimuron, dichlormid, dicyclonon, dimepiperate, disulfoton, fenchlorazole-ethyl, fenclorim, flurazole, fluxofenim, furilazole, isoxadifenethyl, mefenpyr-diethyl, MG 191, MON 4660, naphthalic anhydride (NA), oxabetrinil, R29148 and *N*-phenyl-sulfonylbenzoic acid amides, to enhance their selectivity.

In practice, it is preferable to use the synergistic composition of the present invention in mixtures containing an herbicidally effective amount of the herbicidal components along with at least one agriculturally acceptable adjuvant or carrier. Suitable adjuvants or carriers should not be phytotoxic to valuable crops, particularly at the concentrations employed in applying the compositions for selective weed control in the presence of crops, and should not react chemically with herbicidal components or other composition ingredients. Such mixtures can be designed for application directly to weeds or their locus or can be concentrates or formulations that are normally diluted with additional carriers and adjuvants before application. They can be solids, such as, for example, dusts, granules, water dispersible granules, or wettable powders, or liquids, such as, for example, emulsifiable concentrates, solutions, emulsions or suspensions.

Suitable agricultural adjuvants and carriers that are useful in preparing the herbicidal mixtures of the invention are well known to those skilled in the art.

Liquid carriers that can be employed include water, toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methanol, ethanol, isopropanol, amyl alcohol, ethylene glycol, propylene glycol, glycerine, N-methylpyrrolidinone, *N-N*-dimethylalkylamides, dimethyl sulfoxide and the like. Water is generally the carrier of choice for the dilution of concentrates.

Suitable solid carriers include talc, pyrophyllite clay, silica, attapulgus clay, kaolin clay, kieselguhr, chalk, diatomaceous earth, lime, calcium carbonate, bentonite clay, Fuller's earth, cotton seed hulls, wheat flour, soybean flour, pumice, wood flour, walnut shell flour, lignin, and the like.

It is usually desirable to incorporate one or more surface-active agents into the compositions of the present invention. Such surface-active agents are advantageously employed in both solid and liquid compositions, especially those designed to be diluted with carrier before application. The surface-active agents can be anionic, cationic or nonionic in character and can be employed as emulsifying agents, wetting agents, suspending agents, or for other purposes. Typical surface-active agents include salts of alkyl sulfates, such as diethanolammonium lauryl sulfate; alkylarylsulfonate salts, such as calcium dodecylbenzenesulfonate; alkylphenol-alkylene oxide addition products, such as nonylphenol-$C_{18}$ ethoxylate; alcohol-alkylene oxide addition products, such as tridecyl alcohol-$C_{16}$ ethoxylate; soaps, such as sodium stearate; alkylnaphthalene-sulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; and salts of mono and dialkyl phosphate esters.

Other adjuvants commonly used in agricultural compositions include compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants, fungicides, insecticides, and the like and can be formulated with liquid fertilizers or solid, particulate fertilizer carriers such as ammonium nitrate, urea and the like.

The concentration of the active ingredients in the synergistic composition of the present invention is generally from 0.001 to 98 percent by weight. Concentrations from 0.01 to 90 percent by weight are often employed. In compositions designed to be employed as concentrates, the active ingredients are generally present in a concentration from 5 to 98 weight percent, preferably 10 to 90 weight percent. Such compositions are typically diluted with an inert carrier, such as water, before application. The diluted compositions usually applied to weeds or the locus of weeds generally contain 0.0001 to 1 weight percent active ingredient and preferably contain 0.001 to 0.05 weight percent.

The present compositions can be applied to weeds or their locus by the use of conventional ground or aerial dusters, sprayers, and granule applicators, by addition to irrigation water, and by other conventional means known to those skilled in the art.

The following examples illustrate the present invention.

Examples

2,4-D (dimethylamine salt), dichlorprop (potassium salt) and Glyphomax XRT® herbicide (isopropylamine salt) alone and in combinations were applied to the foliage of rapidly growing plant material utilizing a track sprayer calibrated to deliver an application volume of 187 L/ha. Treated plant material was maintained in a greenhouse that provided a 16-hr photoperiod, supplemented with metal halide-generated light, set to provide a minimum of 500 $\mu molm^{-2}s^{-1}$. The greenhouse was maintained at a temperature of 26 to 28 °C and a relative humidity of 50 to 70%. Assessment of herbicidal activity was performed visually 14 to 21 days after application.

The expected growth reduction of plant species from the combination of herbicides was calculated utilizing the Colby equation:

$$\text{Expected growth reduction (E)} = X+Y-(X^*Y/100)$$

where X is % of growth reduction of a weed at a given concentration of a herbicide (or herbicide formulation) and Y is the % growth reduction of the same species and size weed at a given concentration of an independent herbicide (or herbicide formulation).

Tables I, II, III and IV contain the data for expected and actual herbicidal growth reduction caused by relevant individual herbicides and combinations of these herbicides on agronomically important weeds.

TABLE I: Herbicidal effects of Glyphomax XRT®, 2,4-D and combinations of the two herbicides on select broadleaf weeds.

| Species | Glyphomax XRT Rate | 2,4-D Rate | Expected Injury* | Actual Injury |
|---|---|---|---|---|
| | (g ae/ha) | (g ae/ha) | (% growth reduction) | (% growth reduction) |
| IPOHE | 210 | 0 | -- | 43 |
| | 0 | 70 | -- | 17 |
| | 210 | 70 | 53 | 93 |
| CIRAR | 210 | 0 | -- | 25 |
| | 0 | 280 | -- | 38 |
| | 210 | 280 | 54 | 95 |
| SIDSP | 420 | 0 | -- | 33 |
| | 0 | 140 | -- | 17 |
| | 420 | 140 | 44 | 72 |
| ABUTH | 210 | 0 | -- | 17 |
| | 0 | 280 | -- | 28 |
| | 210 | 280 | 40 | 60 |
| AMBEL | 105 | 0 | -- | 12 |
| | 0 | 140 | -- | 61 |

(continued)

| Species | Glyphomax XRT Rate | 2,4-D Rate | Expected Injury* | Actual Injury |
|---|---|---|---|---|
| | (g ae/ha) | (g ae/ha) | (% growth reduction) | (% growth reduction) |
| | 105 | 140 | 66 | 96 |
| COMBE | 560 | 0 | -- | 38 |
| | 0 | 140 | -- | 48 |
| | 560 | 140 | 68 | 95 |
| SEBEX | 210 | 0 | -- | 13 |
| | 0 | 280 | -- | 37 |
| | 210 | 280 | 45 | 93 |
| POLCO | 420 | 0 | -- | 18 |
| | 0 | 280 | -- | 32 |
| | 420 | 280 | 44 | 83 |
| AMATA | 210 | 0 | -- | 8 |
| | 0 | 280 | -- | 53 |
| | 210 | 280 | 57 | 99 |
| *Expected injury values were calculated using Colby's equation. | | | | |

Table II: Herbicidal effects of Glyphomax XRT®, 2,4-D and combinations of the two herbicides on glyphosate-susceptible and glyphosate-resistant *Conyza canadensis* (ERICA).

| Species | Glyphomax XRT Rate | 2,4-D Rate | Expected Injury* | Actual Injury |
|---|---|---|---|---|
| | (g ae/ha) | (g ae/ha) | (% growth reduction) | (% growth reduction) |
| ERICA Glyphosate Susceptible | 420 | 0 | -- | 50 |
| | 0 | 35 | -- | 47 |
| | 420 | 35 | 74 | 86 |
| ERICA Glyphosate Resistant | 420 | 0 | -- | 12 |
| | 0 | 70 | -- | 38 |
| | 420 | 70 | 45 | 99 |
| *Expected injury values were calculated using Colby's equation. | | | | |

Table III: Herbicidal effects of Glyphomax XRT®, dichlorprop and combinations of the two herbicides on glyphosate-susceptible and glyphosate-resistant *Conyza canadensis* (ERICA).

| Species | Glyphomax XRT Rate | Dichlorprop Rate | Expected Injury* | Actual Injury |
|---|---|---|---|---|
| | (g ae/ha) | (g ae/ha) | (% growth reduction) | (% growth reduction) |
| ERICA Glyphosate Susceptible | 420 | 0 | -- | 50 |
| | 0 | 210 | -- | 43 |
| | 420 | 210 | 72 | 92 |

(continued)

| Species | Glyphomax XRT Rate | Dichlorprop Rate | Expected Injury* | Actual Injury |
|---|---|---|---|---|
| | (g ae/ha) | (g ae/ha) | (% growth reduction) | (% growth reduction) |
| ERICA Glyphosate Resistant | 420 | 0 | -- | 12 |
| | 0 | 210 | -- | 43 |
| | 420 | 210 | 50 | 93 |
| *Expected injury values were calculated using Colby's equation. | | | | |

Table IV: Herbicidal effects of Glyphomax XRT®, dichlorprop and combinations of the two herbicides on select broadleaf weeds.

| Species | Glyphomax XRT Rate | Dichlorprop Rate | Expected Injury* | Actual Injury |
|---|---|---|---|---|
| | (g ae/ha) | (g ae/ha) | (% growth reduction) | (% growth reduction) |
| IPOHE | 105 | 0 | -- | 12 |
| | 0 | 70 | -- | 68 |
| | 105 | 70 | 72 | 92 |
| CIRAR | 210 | 0 | -- | 25 |
| | 0 | 70 | -- | 48 |
| | 210 | 70 | 61 | 85 |
| ABUTH | 210 | 0 | -- | 17 |
| | 0 | 70 | -- | 33 |
| | 210 | 70 | 44 | 58 |
| AMBEL | 105 | 0 | -- | 12 |
| | 0 | 280 | -- | 58 |
| | 105 | 280 | 63 | 82 |
| COMBE | 560 | 0 | -- | 38 |
| | 0 | 70 | -- | 80 |
| | 560 | 70 | 88 | 96 |
| SEBEX | 210 | 0 | -- | 13 |
| | 0 | 140 | -- | 38 |
| | 210 | 140 | 46 | 75 |
| POLCO | 420 | 0 | -- | 18 |
| | 0 | 140 | -- | 38 |
| | 420 | 140 | 49 | 87 |
| AMATA | 210 | 0 | -- | 8 |
| | 0 | 280 | -- | 48 |
| | 210 | 280 | 52 | 98 |
| *Expected injury values were calculated using Colby's equation. | | | | |

A field study was conducted at Church Hill, MD where glyphosate-resistant horseweed (ERICA, *Conyza ca-*

*nadensis*) had been observed for 2-3 years prior to the start of this study. The study design was a split-plot with 4 replications per treatment and each plot was 3.048 M wide and 9.144 M long. The environmental conditions at the time of application were as follows: air temperature, 22 °C; wind speed, 6 kph; wind direction, south; releative humidity, 85%; cloud cover, 80%; target foliage moisture, none; soil moisture, moist; soil temperature at 5 cm depth, 21 °C. The treatments were applied using a backpack $CO_2$ sprayer, with six XR8003 flat fan nozzles spaced 46 cm apart (boom length: 2.76 M) and held 40 cm above the plant canopy. The sprayer was operated at 103 kPa and 4,8 kilometers per hour to deliver 187 L of water per hectare. At the time of applications the glyphosate-resistant horseweed were 30 - 38 cm tall and there were between10 and 20 plants per square meter ($m^2$). The percent visual control of glyphosate-resistant horseweed was rated over the entire plot (27.87 $m^2$) 29 days after application.. In each plot between 278 and 557 glyphosate-resistant horseweed plants were rated, collectively, for percent visual control. The results are tabulated in Table V.

Table V: Herbicidal effects of Glyphomax Plus®, 2,4-D and combinations of the two herbicides on glyphosate-resistant *Conyza canadensis* (ERICA)

| Glyphomax Plus Rate | 2,4-D Rate | Expected Injury* | Actual Injury |
|---|---|---|---|
| (g ae/ha) | (g ae/ha) | (% growth reduction) | (% growth reduction) |
| 280 | 0 | -- | 2.5 |
| 0 | 280 | -- | 12.5 |
| 280 | 280 | 14.7 | 35.0 |
| 280 | 0 | -- | 2.5 |
| 0 | 560 | -- | 23.0 |
| 280 | 560 | 24.9 | 43.8 |
| 280 | 0 | -- | 2.5 |
| 0 | 1120 | -- | 36.3 |
| 280 | 1120 | 37.9 | 57.5 |
| 560 | 0 | -- | 8.8 |
| 0 | 280 | -- | 12.5 |
| 560 | 280 | 20.2 | 61.3 |
| 560 | 0 | -- | 8.8 |
| 0 | 560 | -- | 23.0 |
| 560 | 560 | 29.8 | 68.8 |
| 560 | 0 | -- | 8.8 |
| 0 | 1120 | -- | 36.3 |
| 560 | 1120 | 41.9 | 86.8 |
| 840 | 0 | -- | 13.8 |
| 0 | 280 | -- | 12.5 |
| 840 | 280 | 24.6 | 60.0 |
| 840 | 0 | -- | 13.8 |
| 0 | 560 | -- | 23.0 |
| 840 | 560 | 33.6 | 87.5 |
| 840 | 0 | -- | 13.8 |
| 0 | 1120 | -- | 36.3 |
| 840 | 1120 | 45.1 | 74.5 |
| *Expected injury values were calculated using Colby's equation. | | | |

Although the invention has been described with reference to preferred embodiments and examples thereof, the scope of the present invention is not limited only to those described embodiments. As will be apparent to persons skilled in the art, modifications and adaptations to the above-described invention can be made without departing from the spirit and scope of the invention, which is defined and circumscribed by the appended claims.

## Claims

1. An herbicidal mixture comprising an herbicidally effective amount of (a) a substituted phenoxy alkanoic acid derivative of the formula

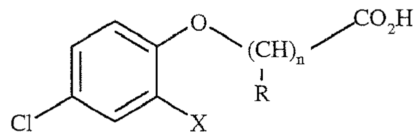

wherein

X represents Cl or $CH_3$;
R independently represents H or $CH_3$; and
n is an integer from 1-3;

and (b) a glyphosate derivative.

2. The herbicidal mixture of Claim 1 in which the substituted phenoxy alkanoic acid derivative is a 2,4-D or dichlorprop derivative.

3. The mixture of Claim 2 in which the 2,4-D or dichlorprop derivative is a 2,4-D salt.

4. The mixture of Claim 3 in which the 2,4-D salt is the 2,4-D dimethylamine salt.

5. The mixture of Claim 2 in which the 2,4-D or dichlorprop derivative is a dichlorprop salt.

6. The mixture of Claim 5 in which the dichlorprop salt is the dichlorprop potassium salt.

7. The mixture of Claim 1 in which the glyphosate derivative is a glyphosate salt.

8. The mixture of Claim 7 in which the glyphosate salt is the glyphosate isopropylamine salt.

9. The mixture of Claim 1 in which the weight ratio on an acid equivalent basis of the substituted phenoxy alkanoic acid derivative component to the glyphosate component is between 5:1 and 1:48.

10. The mixture of Claim 2 in which the weight ratio on an acid equivalent basis of the 2,4-D or dichlorprop component to the glyphosate component is between 3:1 and 1:12.

11. An herbicidal composition comprising an herbicidally effective amount of the herbicidal mixture of Claim and an agriculturally acceptable adjuvant or carrier.

12. A method of controlling undesirable vegetation which comprises contacting the vegetation or the locus thereof with or applying to the soil to prevent the emergence of vegetation an herbicidally effective amount the herbicidal mixture of Claim 1.

13. The method of Claim 12 in which the undesirable vegetation is glyphosate-resistant horseweed.

Europäisches Patentamt
European Patent Office
Office européen des brevets

# EUROPEAN SEARCH REPORT

Application Number
EP 12 17 4087

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HARTZLER B, OWEN M: "Horseweed-A weed on the rise", INTEGRATED CROP MANAGEMENT , 24 April 2006 (2006-04-24), XP002502425, Retrieved from the Internet: URL:http://www.ipm.iastate.edu/ipm/icm/2006/4-24/horseweed.html [retrieved on 2008-11-03] * the whole document * | 1-13 | INV. A01N57/20 A01N39/02 A01N39/04 |
| X | BOERBOOM C: "Horseweed, Resistance, and Wind", WINSCONSIN CROP MANAGER , 26 April 2007 (2007-04-26), XP002502424, Retrieved from the Internet: URL:http://ipcm.wisc.edu/Portals/0/Blog/Files/17/250/WCM%2014(8).pdf [retrieved on 2008-11-03] * page 51 * | 1-13 | |
| X | WO 2005/087007 A (MONSANTO TECHNOLOGY LLC [US]; BECHER DAVID Z [US]; AGBAJE HENRY E [US]) 22 September 2005 (2005-09-22) * pages 36-42; examples 1-3 * * pages 44-48; examples 5,6 * * pages 64-78; examples 19-25 * | 1-12 | TECHNICAL FIELDS SEARCHED (IPC): A01N |
| X | US 2006/270556 A1 (WRIGHT DANIEL R [US] ET AL) 30 November 2006 (2006-11-30) * abstract * * page 9, paragraph 104-138 * * page 13 - page 18; examples 1-14 * | 1-12 | |
| | -/-- | | |

The present search report has been drawn up for all claims

1

| Place of search | Date of completion of the search | Examiner |
|---|---|---|
| Munich | 20 August 2012 | Davies, Maxwell |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 12 17 4087

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HARTZLER B, OWEN M: "Horseweed-A weed on the rise", INTEGRATED CROP MANAGEMENT , 24 April 2006 (2006-04-24), XP002502425, Retrieved from the Internet: URL:http://www.ipm.iastate.edu/ipm/icm/2006/4-24/horseweed.html [retrieved on 2008-11-03] * the whole document * | 1-13 | INV. A01N57/20 A01N39/02 A01N39/04 |
| X | BOERBOOM C: "Horseweed, Resistance, and Wind", WINSCONSIN CROP MANAGER , 26 April 2007 (2007-04-26), XP002502424, Retrieved from the Internet: URL:http://ipcm.wisc.edu/Portals/0/Blog/Files/17/250/WCM%2014(8).pdf [retrieved on 2008-11-03] * page 51 * | 1-13 | |
| | | | TECHNICAL FIELDS SEARCHED (IPC) |
| X | WO 2005/087007 A (MONSANTO TECHNOLOGY LLC [US]; BECHER DAVID Z [US]; AGBAJE HENRY E [US]) 22 September 2005 (2005-09-22) * pages 36-42; examples 1-3 * * pages 44-48; examples 5,6 * * pages 64-78; examples 19-25 * | 1-12 | A01N |
| X | US 2006/270556 A1 (WRIGHT DANIEL R [US] ET AL) 30 November 2006 (2006-11-30) * abstract * * page 9, paragraph 104-138 * * page 13 - page 18; examples 1-14 * | 1-12 | |
| | -/-- | | |

The present search report has been drawn up for all claims

| Place of search | Date of completion of the search | Examiner |
|---|---|---|
| Munich | 20 August 2012 | Davies, Maxwell |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

1

EPO FORM 1503 03.82 (P04C01)

Europäisches Patentamt
European Patent Office
Office européen des brevets

# EUROPEAN SEARCH REPORT

Application Number
EP 12 17 4087

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/32227 A (VICTORIAN CHEMICALS INTERNAT P [AU]; KILLICK ROBERT WILLIAM [AU]; KILL) 25 April 2002 (2002-04-25)<br>* page 8, line 10 - line 15 *<br>* pages 20-21; examples 20-22 *<br>----- | 1-12 | |
| X | US 4 445 927 A (GIMESI ANTAL [HU] ET AL) 1 May 1984 (1984-05-01)<br>* the whole document *<br>----- | 1-12 | |
| X | GB 2 267 825 A (DOWELANCO [US]) 22 December 1993 (1993-12-22)<br>* abstract; example 4 *<br>----- | 1-12 | |
| X | FLINT J L ET AL: "EFFECTS OF GLYPHOSATE COMBINATIONS WITH 2,4-D OR DICAMBA ON FIELD BINDWEED (CONVOLVULUS ARVENSIS)", WEED SCIENCE, WEED SCIENCE SOCIETY OF AMERICA, CHAMPAIGN, IL, US, vol. 37, 1 January 1989 (1989-01-01), pages 12-18, XP001070550, ISSN: 0043-1745<br>* abstract *<br>----- | 1-12 | TECHNICAL FIELDS SEARCHED (IPC) |
| X | WIESE A F, SALISBURY C D, BEAN B W: "Downy Brome (Bromus tectorum), Jointed Goatgrass (Aegilops cylindrica) and Horseweed (Conyza canadensis) Control in Fallow", WEED TECHNOLOGY, vol. 9, 1995, pages 249-254, XP009108149,<br>* abstract *<br>----- | 1-13 | |
| X | WO 03/090535 A (SICHUAN LOMON BIO TECHNOLOGY C [CN]; CHENGDU INST OF BIOLOGY CHINES [C) 6 November 2003 (2003-11-06)<br>* abstract *<br>* page 8; table 1 *<br>* page 9; table 2 *<br>----- | 1,2,5-12 | |

The present search report has been drawn up for all claims

1

| Place of search | Date of completion of the search | Examiner |
|---|---|---|
| Munich | 20 August 2012 | Davies, Maxwell |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

Application Number
EP 12 17 4087

## CLAIMS INCURRING FEES

The present European patent application comprised at the time of filing claims for which payment was due.

- [ ] Only part of the claims have been paid within the prescribed time limit. The present European search report has been drawn up for those claims for which no payment was due and for those claims for which claims fees have been paid, namely claim(s):

- [ ] No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

- [X] All further search fees have been paid within the fixed time limit. The present European search report has been drawn up for all claims.

- [X] As all searchable claims could be searched without effort justifying an additional fee, the Search Division did not invite payment of any additional fee.

- [ ] Only part of the further search fees have been paid within the fixed time limit. The present European search report has been drawn up for those parts of the European patent application which relate to the inventions in respect of which search fees have been paid, namely claims:

- [ ] None of the further search fees have been paid within the fixed time limit. The present European search report has been drawn up for those parts of the European patent application which relate to the invention first mentioned in the claims, namely claims:

- [ ] The present supplementary European search report has been drawn up for those parts of the European patent application which relate to the invention first mentioned in the claims (Rule 164 (1) EPC).

Europäisches Patentamt
European Patent Office
Office européen des brevets

**LACK OF UNITY OF INVENTION SHEET B**

Application Number
EP 12 17 4087

The Search Division considers that the present European patent application does not comply with the requirements of unity of invention and relates to several inventions or groups of inventions, namely:

1. claims: 3, 4(completely); 1, 2, 7-13(partially)

   A herbicidal mixture comprising glyphosate or derivative thereof and a phenoxy acid/salt derivative of the formula of claim 1 wherein R is H.

   ---

2. claims: 5, 6(completely); 1, 2, 7-13(partially)

   herbicidal mixture comprising glyphosate or derivative thereof and a phenoxy acid/salt derivative of the formula of claim 1 wherein R is a methyl group.

   ---

## ANNEX TO THE EUROPEAN SEARCH REPORT ON EUROPEAN PATENT APPLICATION NO. EP 12 17 4087

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2012

| Patent document cited in search report | Publication date | Patent family member(s) | Publication date |
|---|---|---|---|
| WO 2005087007 A | 22-09-2005 | AT 517548 T | 15-08-2011 |
| | | AU 2005221166 A1 | 22-09-2005 |
| | | BR PI0508542 A | 14-08-2007 |
| | | CA 2558642 A1 | 22-09-2005 |
| | | CN 1960634 A | 09-05-2007 |
| | | EP 1722634 A1 | 22-11-2006 |
| | | ES 2368721 T3 | 21-11-2011 |
| | | US 2006019828 A1 | 26-01-2006 |
| | | US 2011034332 A1 | 10-02-2011 |
| | | WO 2005087007 A1 | 22-09-2005 |
| | | ZA 200607467 A | 27-08-2008 |
| US 2006270556 A1 | 30-11-2006 | AR 053875 A1 | 23-05-2007 |
| | | AU 2006251766 A1 | 30-11-2006 |
| | | BR PI0611373 A2 | 31-08-2010 |
| | | CA 2608206 A1 | 30-11-2006 |
| | | CR 9546 A | 11-09-2008 |
| | | EP 1947948 A2 | 30-07-2008 |
| | | US 2006270556 A1 | 30-11-2006 |
| | | WO 2006127501 A2 | 30-11-2006 |
| WO 0232227 A | 25-04-2002 | AT 324044 T | 15-05-2006 |
| | | CA 2425136 A1 | 25-04-2002 |
| | | DE 60119152 T2 | 22-02-2007 |
| | | DK 1333721 T3 | 28-08-2006 |
| | | EP 1333721 A1 | 13-08-2003 |
| | | ES 2261477 T3 | 16-11-2006 |
| | | PT 1333721 E | 31-08-2006 |
| | | US 2003191026 A1 | 09-10-2003 |
| | | WO 0232227 A1 | 25-04-2002 |
| US 4445927 A | 01-05-1984 | AU 534692 B2 | 09-02-1984 |
| | | AU 6701381 A | 22-07-1981 |
| | | BE 886889 A1 | 16-04-1981 |
| | | BG 35742 A3 | 15-06-1984 |
| | | BR 8009000 A | 20-10-1981 |
| | | CH 648187 A5 | 15-03-1985 |
| | | CS 219936 B2 | 25-03-1983 |
| | | DD 155867 A5 | 14-07-1982 |
| | | DE 3050142 C2 | 09-10-1986 |
| | | EP 0042854 A1 | 06-01-1982 |
| | | FI 804025 A | 29-06-1981 |
| | | HU 182980 B | 28-03-1984 |
| | | IL 61814 A | 31-12-1985 |
| | | JP S56501804 A | 10-12-1981 |
| | | NO 812349 A | 09-07-1981 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO. EP 12 17 4087

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2012

| Patent document cited in search report | Publication date | Patent family member(s) | Publication date |
|---|---|---|---|
| | | NZ 195945 A | 30-09-1983 |
| | | PT 72287 A | 01-01-1981 |
| | | PT 72299 A | 01-01-1981 |
| | | RO 82658 A1 | 12-05-1984 |
| | | US 4445927 A | 01-05-1984 |
| | | WO 8101787 A1 | 09-07-1981 |
| | | ZA 8008053 A | 27-01-1982 |
| GB 2267825 A | 22-12-1993 | NONE | |
| WO 03090535 A | 06-11-2003 | CN 1379980 A | 20-11-2002 |
| | | WO 03090535 A1 | 06-11-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 60937788 B


### Non-patent literature cited in the description


- Herbicide Handbook. Weed Science Society of America, 1994, 318